Europäisches Patentamt

European Patent Office

Office européen des brevets

(19)

(11) Numéro de publication : **0 187 071 B1**

(12) **FASCICULE DE BREVET EUROPÉEN**

(45) Date de publication du fascicule du brevet :
24.01.90

(51) Int. Cl.⁵ : **G 01 P 3/481**

(21) Numéro de dépôt : 85402327.2

(22) Date de dépôt : 27.11.85

(54) **Système électronique d'élaboration d'un signal synchrone d'un signal d'allumage de moteur à combustion interne.**

(30) Priorité : 04.12.84 FR 8418453

(43) Date de publication de la demande :
09.07.86 Bulletin 86/28

(45) Mention de la délivrance du brevet :
24.01.90 Bulletin 90/04

(84) Etats contractants désignés :
DE GB IT

(56) Documents cités :
DE--B-- 2 235 056
FR--A-- 2 462 821
GB--A-- 919 422
US--A-- 3 202 910
US--A-- 4 250 450
ELEKTOR, no. 9, septembre 1984, pages 9.45-9.49,
Amsterdam, NL; "Digital tachometer"
PATENTS ABSTRACTS OF JAPAN, vol. 7, no. 96 (P-
193) [1241], 22 avril 1983; & JP - A - 58 22 962 (NISSAN
JIDOSHA K.K.) 10-02-1983

(73) Titulaire : **Bendix Electronics S.A.**
**Avenue du Mirail, B.P. 1149**
**F-31036 Toulouse Cédex (FR)**

(72) Inventeur : **Nozeran, Jean-Marc**
**105, rue Roquemaurel Bât. B**
**F-31300 Toulouse (FR)**
Inventeur : **Grimaud, Jean-Michel**
**Au Village Larra**
**F-31330 Grenade (FR)**

(74) Mandataire : **Colas, Jean-Pierre et al**
**Cabinet de Boisse 37, avenue Franklin D. Roosevelt**
**F-75008 Paris (FR)**

Jouve, 18, rue St-Denis, 75001 Paris, France

**EP 0 187 071 B1**

## Description

La présente invention concerne un système électronique d'élaboration d'un signal synchrone d'un signal d'allumage de moteur à combustion interne.

Lorsque l'on désire connaître la vitesse de rotation d'un moteur, par exemple dans le but de réaliser un compte-tours, un limiteur de régime, etc..., il est possible d'utiliser comme information, et ce pour les moteurs à essence, le signal issu de l'allumage. Ceci dispense de l'adjonction d'un capteur spécifique à la fonction.

On sait que, pour un moteur donné, le nombre d'étincelles par tour est une constante : par exemple deux allumages par tour pour un moteur à quatre cylindres et quatre temps. Le comptage de ces impulsions dans une unité de temps détermine la vitesse de rotation du moteur.

On connaît déjà des systèmes analogiques réalisant des fonctions compte-tours en utilisant le signal d'allumage. Ces systèmes comprennent un étage de mise en forme du signal d'allumage, un monostable de constante de temps $\zeta$, un intégrateur et un dispositif d'affichage du régime moteur. En fonctionnement, le signal d'allumage déclenche le monostable dont la constante de temps prédéterminée $\zeta$ dépend du type de moteur (2 ou 4 temps ; 4, 6 ... cylindres). On obtient en sortie du monostable un signal de période T égale à la période du signal d'allumage et dont la valeur moyenne de la tension V est de la forme :

$$V = A \cdot \frac{\zeta}{T} = B \cdot N,$$

A et B étant des constantes et N le régime moteur (nombre de tours/mn).

L'intégration du signal de sortie du monostable permet donc d'obtenir une tension proportionnelle au régime moteur à partir de laquelle on commande le dispositif d'affichage, qui sera de préférence analogique.

On connaît encore du brevet des Etats-Unis d'Amérique No. 4.250.450 un détecteur de vitesse de rotation d'un moteur à combustion interne comprenant un comparateur à hystérésis pour la mise en forme du signal d'allumage, ce comparateur actionnant un monostable déclenché lors de l'allumage. On masque ainsi les parasites qui se produisent après l'étincelle d'allumage. Le seuil du comparateur varie avec la tension délivrée par la batterie d'alimentation. Ce détecteur est conçu pour fonctionner sur un système d'allumage électronique.

On connaît également des systèmes numériques assurant la même fonction et qui comprennent un étage de mise en forme, un calculateur pour la mesure de la période du signal d'allumage mis en forme, le calcul de l'inverse de cette période et la mise à l'échelle du résultat obtenu, et un dispositif d'affichage.

Dans ces deux types de systèmes, analogiques ou numériques, la mise en forme du signal d'allumage est fondamentale car c'est elle qui garantit la reproduction de la périodicité de ce signal.

Ces systèmes de mesure du régime moteur à partir du signal d'allumage sont associés à des systèmes d'allumage conventionnels à rupteur, qu'il soit mécanique ou électronique, et prélèvent le signal d'allumage ou signal tachymétrique aux bornes du rupteur. Or, la forme de ce dernier n'est pas totalement définie et dépend notamment :

du type de rupteur utilisé (électronique ou mécanique),

du fabricant d'allumeur et des technologies employées (rapport de transformation bobine, etc...),

des conditions de fonctionnement du moteur (régime, charge, etc...) et de son usure (bougies, segmentation),

du type de moteur (suralimenté ou atmosphérique, taux de compression).

De ce fait, dans les réalisations connues, les circuits de mise en forme sont souvent adaptés à un couple allumage-moteur spécifique et ne remplissent pas toujours parfaitement leur fonction.

L'invention vise à fournir un système d'élaboration d'un signal synchrone du signal d'allumage d'un moteur qui présente un fonctionnement sûr et soit aisément adaptable à différents types de moteurs et systèmes d'allumage.

A cet effet, l'invention a pour objet un système électronique d'élaboration d'un signal synchrone d'un signal d'allumage prélevé aux bornes du rupteur associé à la bobine d'allumage d'un moteur à combustion interne, caractérisé en ce qu'il comprend des moyens de comparaison à hystérésis dont le signal de sortie passe d'un premier état à un deuxième état lorsque la tension du signal d'allumage dépasse un seuil haut prédéterminé et revient du deuxième état au premier état lorsque la tension du signal d'allumage descend au-dessous d'un seuil bas prédéterminé, un circuit basculeur déclenché par les moyens de comparaison et dont la sortie délivre ledit signal synchrone, et un circuit discriminateur de durée qui n'autorise la commutation du circuit basculeur en réponse au passage du signal de sortie des moyens de comparaison du deuxième état au premier état que lorsque ledit signal de sortie reste dans le premier état pendant une durée au moins égale à une valeur déterminée.

Selon un mode de réalisation particulier de l'invention, le seuil haut prédéterminé est compris entre la tension du pic initial du signal d'allumage et la tension alimentation de la bobine, et le seuil bas prédéterminé est compris entre la tension d'alimentation et la tension correspondant à la recharge en

2

EP 0 187 071 B1

énergie de la bobine.

Selon un autre mode de réalisation de l'invention, le circuit discriminateur de durée est adapté pour autoriser l'application immédiate au circuit basculeur du signal de sortie des moyens de comparaison lors du passage du premier au deuxième état, et présente, lors du passage de la sortie des moyens de comparaison du deuxième état au premier état, une constante de temps comprise entre une valeur maximale permettant à la tension à l'entrée du circuit basculeur d'atteindre le seuil de commutation de ce dernier et une valeur minimale interdisant à ladite tension d'atteindre ledit seuil de commutation pendant les phases d'oscillation du signal d'allumage comprises entre le pic initial et la phase de recharge en énergie de la bobine.

D'autres caractéristiques et avantages de l'invention ressortiront de la description qui va suivre d'un mode de sa réalisation donné uniquement à titre d'exemple et illustré par les dessins annexés sur lesquels :

la figure 1 est une vue schématique d'un système d'allumage conventionnel à rupteur ;

la figure 2 est un schéma synoptique d'un système d'élaboration d'un signal synchrone d'un signal d'allumage ;

la figure 3 est un schéma électrique d'un mode de réalisation du système de la figure 2 ;

la figure 4a représente la forme du signal d'allumage prélevé aux bornes du rupteur du système d'allumage de la figure 1 ;

la figure 4b représente la forme du signal obtenu en sortie du comparateur du système des figures 2 et 3 ; et

la figure 4c représente la forme du signal synchrone du signal d'allumage obtenu en sortie du système des figures 2 et 3.

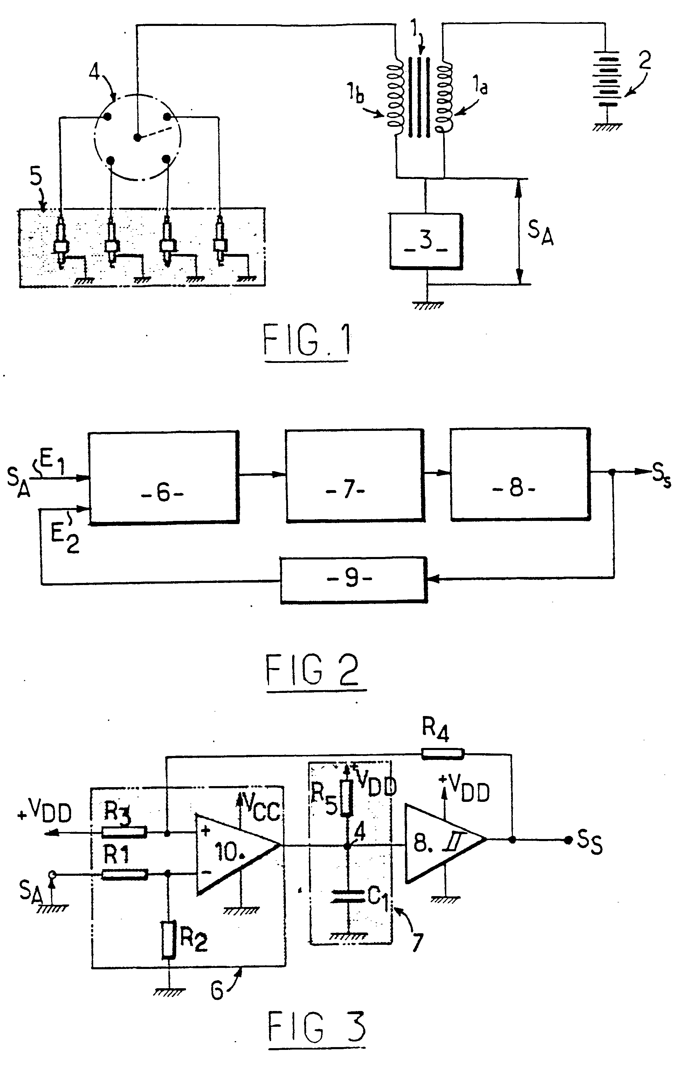

En se reportant à la figure 1, le système d'allumage représenté comprend une bobine d'allumage 1 comprenant un primaire 1a et un secondaire 1b. Le primaire 1a est connecté d'une part à une source de tension d'alimentaiton 2 et d'autre part à la masse par l'intermédiaire d'un rupteur 3. Le secondaire 1b de la bobine est connecté entre le rupteur 3 et un allumeur 4 qui distribue la tension d'allumage à des bougies 5.

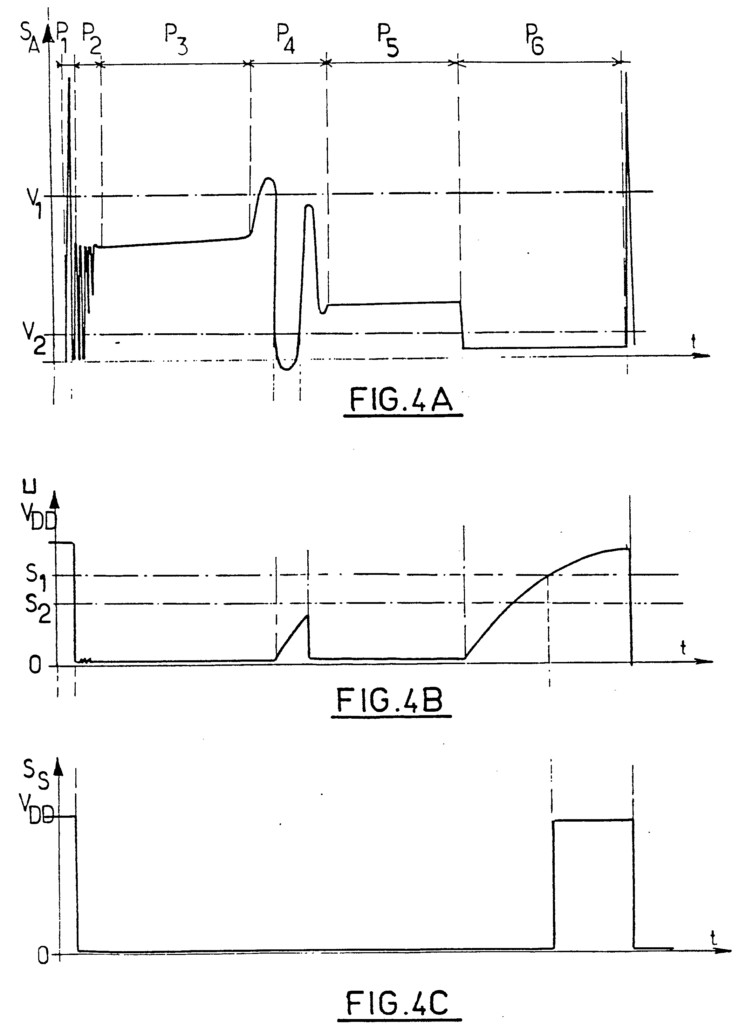

Le signal d'allumage $S_A$ prélevé aux bornes du rupteur 3 présente la forme représentée à la figure 4a.

Ce signal présente un pic initial de tension élevée $P_1$ d'amplitude comprise entre 50 et 500 Volts et de durée variable entre 5 et 300 µs. Celui-ci est suivi d'oscillations hautes fréquences $P_2$, puis d'un premier palier $P_3$ correspondant à la présence de l'arc sur les bougies 5. Cette phase peut se terminer par des oscillations de forte amplitude $P_4$ (pouvant dépasser 100 V et descendre au dessous de 0 V) et dont la période peut attteindre 600 µs. On trouve ensuite un deuxième palier $P_5$ inférieur au premier palier $P_3$ et égal à la tension d'alimentation, suivi d'un troisième palier $P_6$ inférieur au deuxième palier $P_5$ et correspondant à la recharge en énergie de la bobine d'allumage.

L'invention exploite le fait que les phases $P_1$ et $P_6$ sont pratiquement invariantes en fonction des conditions de fonctionnement et présentent beaucoup de similitudes dans les différents systèmes. De plus, ces deux phases sont bien représentatives de la périodicité du signal.

Le système suivant l'invention assurant l'exploitation du signal d'allumage est représenté sous forme synoptique à la figure 2 et comprend des moyens de comparaison 6 dont l'une des entrées reçoit le signal d'allumage $S_A$ et dont la sortie attaque, par l'intermédiaire d'un discriminateur de durée 7, un circuit basculeur 8 dont la sortie délivre le signal $S_S$ synchrone du signal d'allumage $S_A$. Enfin, la sortie du circuit basculeur 8 est rebouclée sur l'autre entrée des moyens de comparaison 6 par l'intermédiaire d'un circuit d'hystéresis 9.

Le système de la figure 2 est conçu de telle façon que la sortie $S_S$ change d'état immédiatement lorsque la tension d'entrée $S_A$ dépasse un seuil haut prédéterminé, mais ne revient à son état initial que lorsque cette même tension $S_A$ reste en dessous d'un seuil bas prédéterminé pendant un temps supérieur à celui du discriminateur de durée 7.

Ce système utilise donc la phase $P_1$ pour la première commutation et la phase $P_6$ pour le retour à l'état initial.

Le fonctionnement du système sera mieux compris à la lumière du mode de réalisation de la figure 3 qui sera maintenant décrit.

Les moyens de comparaison 6 comprennent un comparateur proprement dit 10 dont l'entrée positive (+) est attaquée par une tension de référence $V_{dd}$ par l'intermédiaire d'une résistance $R_3$. Le signal d'allumage $S_A$ est appliqué à l'entrée négative (—) du comparateur 10 par l'intermédiaire d'une résistance $R_1$ et une résistance $R_2$ est connectée entre cette entrée négative et la masse.

La sortie du comparateur 10 attaque l'entrée du circuit basculeur 8 par l'intermédiaire du circuit discriminateur 7 comprenant, d'une part, une résistance $R_5$ connectée entre la sortie du comparateur 10 et la tension $V_{dd}$ et, d'autre part, un condensateur $C_1$ connecté entre la sortie du comparateur 10 et la masse. Le signal développé au point commun entre la résistance $R_5$, le condensateur $C_1$, la sortie du comparateur 10 et l'entrée du circuit basculeur 8 est appelé U.

Enfin, une résistance $R_4$ représentant le circuit d'hystérésis 9 est connectée entre la sortie du circuit basculeur 8 et l'entrée positive (+) du comparateur 10. Le circuit basculeur 8 présente de préférence deux seuils de déclenchement, un seuil haut $S_1$ et un seuil bas $S_2$.

En fonctionnement, en l'absence de signal $S_A$, l'entrée négative (—) du comparateur 10 se trouve

3

connectée à la masse à travers la résistance $R_2$. Quel que soit l'état de la sortie $S_S$, l'entrée positive (+) du comparateur 10 se trouve à un potentiel V (+) plus élevé que l'entrée négative (—) :

si
$$S_S = 0 \text{ Volt } V(+) = V_{dd} \frac{R_4}{R_4 + R_3} > 0$$

si
$$S_S = V_{dd} \quad V(+) = V_{dd} > 0$$

La sortie du comparateur 10 se trouve donc à l'état haut. Celle-ci étant avantageusement constituée par un transistor à collecteur ouvert, celui-ci se trouve dans l'état bloqué. La résistance $R_5$ ayant chargé le condensateur $C_1$, la tension U est donc égale à $V_{dd}$. Le circuit basculeur 8 étant non inverseur, sa sortie $S_S$ se trouve à l'état haut et sa tension de sortie est égale à $V_{dd}$. Appelons cet état du système ETAT A.

Dans cette configuration, l'entrée positive (+) du comparateur 10 se trouve à une tension égale à $+ V_{dd}$. Si l'on applique sur l'entrée $S_A$ une tension supérieure à $V_1$, $V_1$ étant telle que

$$V_1 \frac{R_2}{R_1 + R_2} = V_{dd},$$

l'entrée négative du comparateur 10 devient supérieure à l'entrée positive. Celui-ci change donc d'état. Le transistor de sortie du comparateur 10 conduit et décharge quasi immédiatement le condensateur $C_1$. La tension u descend donc à une valeur proche de zéro, inférieure au seuil bas $S_2$ de déclenchement du circuit basculeur 8. La sortie $S_S$ se trouve à l'état bas ($S_S = 0$) et l'entrée positive du comparateur 10 a un potentiel défini par les résistances $R_3$ et $R_4$ et égal à

$$V_{dd} \frac{R_4}{R_3 + R_4} .$$

Lors de ce changement d'état, le système se comporte donc comme un simple comparateur à hystérésis. Appelons cet état du système ETAT B.

Dès lors que l'on soumet l'entrée $S_A$ à une tension inférieure à $V_2$ avec $V_2$ telle que :

$$V_2 \frac{R_2}{R_1 + R_2} = V_{dd} \frac{R_4}{R_3 + R_4} ,$$

l'entrée négative du comparateur 10 devient inférieure à l'entrée positive. Le comprateur 10 commute et son transistor de sortie passe de l'état conducteur à l'état bloqué. Le condensateur $C_1$ se charge à travers la résistance $R_5$ et la tension U tend exponentiellement vers $V_{dd}$.

Tant que la tension U reste inférieure au seuil de basculement du circuit 8, la sortie $S_S$ est maintenue à l'état bas et la valeur de la tension de l'entrée (+) du comparateur 10 ne change pas. Si, avant que la tension n'ait atteint le seuil haut $S_1$ de commutation du circuit basculeur 8, la tension sur l'entrée $S_A$ excède le seuil $V_2$ précédemment défini, le comparateur 10 retourne au niveau bas et le condensateur $C_1$ est déchargé. Le système reste donc à l'état B sans qu'il y ait eu de commutation sur la sortie $S_S$.

Pour que la sortie $S_S$ commute et que le système retourne à l'état A, il faut que le transistor de sortie du comparateur 10 reste consécutivement bloqué (donc que l'entrée $S_A$ reste inférieure à $V_2$) pendant un temps suffisant pour que la tension U ait atteint le seuil haut de commutation $S_1$ du circuit basculeur 8.

Si l'on considère maintenant les formes de signaux données aux figures $4_A$, $4_B$ et $4_C$, le seuil $V_1$ est choisi de telle sorte que la sortie $S_S$ commute lors de la phase $P_1$.

Dans la phase $P_2$, on observe des variations de tension en U dues au fait que le signal d'allumage $S_A$ descend au dessous du seuil $V_2$. Cependant, la constante de temps $R_5$. $C_1$ du discriminateur 7 est choisie de telle sorte que l'amplitude de ces variations n'atteigne pas le seuil de commutation du circuit basculeur 8. Durant la phase $P_3$, on maintient les signaux U et $S_S$ à l'état bas en choisissant un seuil $V_2$ inférieur à la tension du signal d'allumage $S_A$ durant cette phase.

Lors de la phase $P_4$, le signal d'allumage $S_A$ peut prendre des valeurs inférieures à $V_2$. On doit donc choisir une constance de temps $R_5 C_1$ du circuit discriminateur 7 telle que l'amplitude du signal en U n'affecte pas le circuit basculeur 8. La durée consécutive du signal d'allumage $S_A$ à un niveau inférieur à $V_2$ conditionne cette constante de temps $R_5 C_1$ du discriminateur 7.

Pendant la phase $P_5$, les tensions en $S_S$ et U doivent rester au niveau bas. On doit donc choisir $V_2$ inférieure à la tension du signal d'allumage $S_A$ pendant cette phase, c'est-à-dire inférieure à la tension d'alimentation du système d'allumage.

Dans la phase $P_6$, le signal de sortie $S_S$ doit pouvoir commuter. Pour ce faire, la tension $V_2$ doit être supérieure à la tension générée dans cette phase, qui correspond à la recharge en énergie de la bobine, et la constante de temps du discriminateur 8 telle que le seuil haut $S_1$ du circuit basculeur 8 puisse être atteint durant cette phase.

On. voit donc qu'en choisissant convenablement les seuils $V_1$, $V_2$ et la constante de temps du discriminateur 7, on arrive à filtrer et mettre en forme un signal d'allumage. En sortie d'un tel système, on dispose aisément des informations concernant la périodicité du signal allumage et le moment où se produit l'étincelle sur la bougie, qui correspond au front descendant du signal $S_S$.

De nombreuses modifications peuvent être apportées au mode de réalisation décrit sans sortir du cadre de l'invention. C'est ainsi, par exemple, que le circuit basculeur 8 peut ne comporter qu'un seuil unique de commutation, l'existence de deux seuils $S_1$ et $S_2$ étant liée aux caractéristiques des circuits disponibles.

**Revendications**

1. Système électronique d'élaboration d'un signal synchrone d'un signal d'allumage prélevé aux bornes du rupteur associé à la bobine d'allumage d'un moteur à combustion interne, comprenant des moyens de comparaison à hystérésis (6, 9) dont le signal de sortie (U) passe d'un premier état à un deuxième état lorsque la tension du signal d'allumage ($S_A$) dépasse un seuil haut prédéterminé ($V_1$) et revient du deuxième état au premier état lorsque la tension du signal d'allumage ($S_A$) descend au-dessous d'un seuil bas prédéterminé ($V_2$), caractérisé en ce qu'il comprend un circuit basculeur (8) déclenché par les moyens de comparaison (6, 9) et dont la sortie délivre ledit signal synchrone ($S_s$), et un circuit discriminateur de durée (7) qui n'autorise la commutation du circuit basculeur (8) en réponse au passage du signal de sortie (U) des moyens de comparaison (6, 9) du deuxième état au premier état que lorsque ledit signal de sortie (U) reste dans le premier état pendant une durée au moins égale à une valeur déterminée.

2. Système selon la revendication 1, caractérisé en ce que le seuil haut prédéterminé ($V_1$) est compris entre la tension du pic initial ($P_1$) du signal d'allumage ($S_A$) et la tension d'alimentation ($P_5$) de la bobine, et le seuil bas prédéterminé ($V_2$) est compris entre la tension d'alimentation ($P_5$) et la tension correspondant à la recharge en énergie de la bobine (1).

3. Système selon la revendication 1, caractérisé en ce que le circuit discriminateur de durée (7) est adapté pour autoriser l'application immédiate au circuit basculeur (8) du signal de sortie (U) des moyens de comparaison (6, 9) lors du passage du premier au deuxième état, et présente, lors du passage de la sortie des moyens de comparaison (6, 9) du deuxième état au premier état, une constante de temps ($R_5$ $C_1$) comprise entre une valeur maximale permettant à la tension à l'entrée du circuit basculeur (8) d'atteindre le seuil ($S_1$) de commutation de ce dernier et une valeur minimale interdisant à ladite tension d'atteindre ledit seuil de commutation pendant les phases d'oscillation ($P_2$, $P_1$) du signal d'allumage ($S_A$) comprises entre le pic initial ($P_1$) et la phase ($P_6$) de recharge en énergie de la bobine (1).

4. Système selon l'une quelconque des revendications 1 à 3, caractérisé en ce que les moyens de comparaison à hystérésis (6, 9) comprennent un comparateur (10) et une boucle de réaction (9) entre la sortie du circuit basculeur (8) et une entrée (+) du comparateur (10).

5. Système selon la revendication 4, caractérisé en ce que la boucle de réaction (9) comprend une résistance ($R_4$) connectée entre la sortie du circuit basculeur (8) et l'entrée positive (+) du comparateur (10), ladite entrée positive (+) étant connectée à une tension de référence ($V_{dd}$) par l'intermédiaire d'une résistance ($R_3$), l'entrée négative (—) du comparateur (10) étant connectée d'une part à la masse par l'intermédiaire d'une résistance ($R_2$) et recevant d'autre part le signal d'allumage par l'intermédiaire d'une résistance ($R_1$).

6. Système selon la revendication 5, caractérisé en ce que ledit seuil haut ($V_1$) est égal à

$$V_{dd} \frac{R_1 + R_2}{R_2}$$

et le seuil bas ($V_2$) est égal à

$$V_{dd} \frac{R_4}{R_3 + R_4} \times \frac{R_1 + R_2}{R_2}$$

7. Selon l'une quelconque des revendications 4 à 6, caractérisé en ce que le signal de sortie (U) du comparateur (10) comprend un transistor à collecteur ouvert qui est bloqué dans ledit premier état et débloqué dans ledit second état et en ce que le circuit discriminateur de durée (7) comprend, d'une part, une résistance ($R_5$) connectée entre la source de tension de référence ($V_{dd}$) et le point commun (4) à la sortie du comparateur (10) et à l'entrée du circuit basculeur (8) et, d'autre part, un condensateur ($C_1$) connecté entre ledit point commun (4) et la masse.

**Claims**

1. Electronic system for the production of a signal synchronous with an ignition signal taken from the terminals of the contact breaker associated with the ignition coil of an internal combustion engine, including hysteresis comparaison means (6, 9) delivering an output signal (V) which changes from a first state to a second state when the voltage of the ignition signal ($S_A$) passes a predetermined high threshold ($V_1$) and returns from the second state to the first state when the voltage of the ignition signal (S) drops below a predetermined low threshold ($V_2$), characterized in that it comprises a flip-flop circuit (8) triggered by the said comparison means (6, 9), said flip-flop circuit delivering at its output the said synchronous signal ($S_S$), and a duration discriminator circuit (7) which only authorizes the switching over of the flip-flop circuit (8) in response to the change in the output signal (V) of the comparison means (6, 9) from the second state to the first state when the said output signal (V) remains in the first state for a duration at least equal to a predetermined value.

2. Electronic system according to claim 1, characterized in that the predetermined high threshold ($V_1$) is between the voltage of the initial ignition signal ($S_S$) peak ($P_1$) and the coil supply voltage ($P_5$), and the predetermined low threshold ($V_2$) is between the supply voltage ($P_5$) and the voltage corresponding with the recharging of the coil (1) with energy.

3. Electronic system according to claim 1, characterized in that the duration discriminator circuit (7) includes means to authorize the immediate application to the said flip-flop circuit (8) of the output signal (U) of the means of comparison (6, 9) during the change from the first state to the second state, and shows, during the change in the output of the said comparison means (6, 9) from the second state to the first state, a time constant ($R_5$ $C_1$) between a maximum value enabling the voltage at the input of the flip-flop circuit (8) to reach the switching threshold (S1) of said flip-flop circuit and a minimum value preventing the said voltage from reaching the said switching threshold during the oscillaton phases ($P_2$, $P_1$) of the ignition signal ($S_A$) occuring between the initial peak of said ignition signal ($P_1$) and the phase ($P_6$) of recharging the coil (1) with energy.

4. Electronic system according to claim 1, characterized in that the said hysteresis comparison means (6, 9) include a comparator (10) and a feedback loop (9) between the output of the flip-flop circuit and one input (+) of the comparator (10).

5. Electronic system according to claim 4, characterized in that the said feedback loop (9) comprises a resistor ($R_4$) connected between the output of flip-flop circuit (8) and the positive (+) input of the comparator (10), the said positive (+) input being connected to a reference voltage ($V_{dd}$) through a resistor ($R_3$), the negative (—) input of the comparator (10) being connected on the one hand to ground through a resistor ($R_2$) and on the other hand receiving the ignition signal through another resistor ($R_1$).

6. Electronic system according to claim 5, characterized in that the said high threshold ($V_1$) is equal to

$$V_{dd} \frac{R_1 + R_2}{R_2}$$

and the low threshold ($V_2$) is equal to :

$$V_{dd} \frac{R_4}{R_3 + R_4} \times \frac{R_1 + R_2}{R_2}$$

7. Electronic system according to claim 4, characterized in that the output of the comparator (10) comprises an open collector transistor which is cut off in the first state of the said output signal and conducting in the second of said output signal and in that the duration discriminator circuit (7) includes on the one hand a resistor ($R_5$) connected between the reference voltage source ($V_{dd}$) and the common point at the output of the comparator (10) and the input of the said flip-flop circuit (8), and on the other hand a capacitor ($C_1$) connected between the said common point and ground.

**Patentansprüche**

1. Elektronische Schaltungsanordnung zur Verarbeitung eines Synchronsignals aus dem Zündzeitpunktsignal an den Klemmen eines an die Zündspule einer Brennkraftmaschine angeschlossenen Schalters, bestehend aus einer Hysteresis-Vergleichsschaltung (6, 9), deren Ausgangssignal (U) von einem ersten Zustand in einen zweiten Zustand umschaltet, wenn das Zündspannungssignal ($S_A$) einen vorbestimmten oberen Grenzwert ($V_1$) überschreitet und vom zweiten in den ersten Zustand zurückschaltet, wenn das Zündspannungssignal ($S_A$) unter einen vorbestimmten unteren Grenzwert ($V_2$) fällt, dadurch gekennzeichnet, daß eine von der Vergleichsschaltung (6, 9) getriggerte Umschalteinrichtung (8) vorgesehen ist, an deren Ausgang das Synchronsignal ($S_S$) ansteht und daß eine Zeit-Diskriminatorstufe (7) vorgesehen ist, die das Umschalten der Umschalteinrichtung (8) abhängig vom Ausgangssignal (U) der Vergleichsschaltung (6, 9) vom zweiten Zustand in den ersten Zustand sperrt, solange das Ausgangssignal (U) während einer Zeitdauer im ersten Zustand bleibt, die mindestens gleich einem vorbestimmten Wert ist.

2. Schaltungsanordnung nach Anspruch 1, dadurch gekennzeichnet, daß der vorbbestimmte obere Grenzwert ($V_1$) zwischem einer anfänglichen Scheitelspannung (P) des Zündsignals ($S_A$) und der

Versorgungsspannung ($P_5$) liegt und der untere vorbestimmte Grenzwert ($V_2$) zwischen der Versorgungsspannung ($P_5$) und der Spannung liegt, die dem Wiederaufladen der Zündspule (1) entspricht.

3. Schaltungsanordnung nach Anspruch 1, dadurch gekennzeichnet, daß die Diskriminatorstufe (7) das sofortige Anlegen der Ausgangsspannung (U) der Vergleichsschaltung (6, 9) an die Umschalteinrichtung (8) nach dem Durchgang vom ersten in den zweiten Zustand ermöglicht, und die nach dem Durchgang am Ausgang der Vergleichsschaltung. (6, 9) vom zweiten in den ersten Zustand eine Zeitkonstante ($R_5$ $C_1$) besitzt, die zwischen einem maximalen Wert, bei dem die Eingangsspannung an der Umschalteinrichtung (8) einen Grenzwert ($S_1$) für die Umschaltung erreicht und einem minimalen Wert liegt, bei dem die Spannung den Grenzwert für die Umschaltung während der Oszillationsphasen ($P_2$, $P_1$) der Zündspanung ($S_A$) erreicht, die zwischen dem anfänglichen Scheitelpunkt ($P_1$) und der Phase ($P_6$) zum Wiederaufladen der Zündspule (1) liegt.

4. Schaltungsanordnung nach einem der Ansprüche 1 bis 3, dadurch gekennzeichnet, daß die Hysteresis-Vergleichsschaltung (6, 9) eine Vergleichsstufe (10) und eine Rückkopplungschleife (9) zwischen dem Ausgang der Umschalteinrichtung (8) und einem Eingang (+) der vergleichsstufe (10) aufweist.

5. Schaltungsanordnung nach Anspruch 4, dadurch gekennzeichnet, daß die Rückkopplungsschleife (9) einen Widerstand ($R_4$) aufweist, der zwischen dem Ausgang der Umschalteinrichtung (8) und dem positiven Eingang (+) der Vergleichsstufe (10) angeschlossen ist, daß der positive Eingang (+) an eine Bezugsspannung ($V_{dd}$) über einen zwischengeschalteten Widerstand ($R_3$) angeschlossen ist, daß der negative Eingang (—) der Vergleichsstufe (10) mit Masse über einen zwischengeschalteten Widerstand ($R_2$) verbunden ist und über einen zwischengeschalteten Widerstand ($R_1$) das Zündspanungssignal erhält.

6. Schaltungsanordnung nach Anspruch 5, dadurch gekennzeichnet, daß der obere Grenzwert ($V_1$) gleich

$$V_{dd}\ \frac{R_1 + R_2}{R_2}$$

und der untere Grenzwert ($V_2$) gleich

$$V_{dd}\ \frac{R_4}{R_3 + R_4} \times \frac{R_1 + R_2}{R_2}$$

ist.

7. Schaltungsanordnung nach den Ansprüchen 4 bis 6, dadurch gekennzeichnet, daß der Ausgang (U) der Vergleichsstufe (10) einen Tranistor mit offenem Kollektor aufweist, der im ersten Zustand gesperrt und im zweiten Zustand entsperrt ist und daß die Diskriminatorstufe (7) einen Widerstand ($R_5$) zwischen der Bezugsspannungsquelle ($V_{dd}$) und dem Verbindungspunkt (4) des Ausgangs der Vergleichsstufe (10) mit dem Eingang der Umschalteinrichtung (8) und einen Kondensator ($C_1$) aufweist, der zwischen den gemeinsamen Verbindungspunkt (4) und Masse geschaltet ist.

FIG. 1

FIG 2

FIG 3

FIG.4A

FIG.4B

FIG.4C

2